**Europäisches Patentamt**

**European Patent Office**

**Office européen des brevets**

(19)

(11) **EP 1 148 441 A1**

(12) # DEMANDE DE BREVET EUROPEEN

(43) Date de publication:
**24.10.2001 Bulletin 2001/43**

(51) Int Cl.⁷: $G06N\ 3/063$

(21) Numéro de dépôt: **00810333.5**

(22) Date de dépôt: **17.04.2000**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **C.S.E.M. CENTRE SUISSE D'ELECTRONIQUE ET DE MICROTECHNIQUE SA**
**2007 Neuchâtel (CH)**

(72) Inventeur: **Gyger, Stève**
**2000 Neuchâtel (CH)**

(74) Mandataire: **Brulliard, Joel**
**c/o CSEM Centre Suisse d'Electronique et de Microtechnique SA,**
**Jaquet-Droz 1**
**2007 Neuchâtel (CH)**

(54) **Circuit condenseur de distribution d'activité**

(57) La présente invention concerne un circuit condenseur de distribution d'activité, c'est-à-dire un circuit capable de déterminer avec précision le "centre de gravité" d'une activité, représentée par des grandeurs analogiques, distribuée sur une pluralité de noeuds d'un réseau.

Le circuit comprend un réseau d'entrée qui délivre des grandeurs analogiques distribuées sur une pluralité de noeuds d'entrée. Pour chaque noeud d'entrée, la somme des moments créés par les activités des autres noeuds est calculée et le signe de cette dernière est déterminé. La position du centre de gravité est définie par les valeurs des sommes de moments appliquées sur les deux noeuds adjacents de sortie pour lesquels ces dites valeurs changent de signe.

Le circuit trouve son application dans le traitement des signaux fournis par les rétines artificielles.

Fig. 4.b

EP 1 148 441 A1

**Description**

La présente invention concerne un circuit condenseur de distribution d'activité, c'est-à-dire un circuit capable de déterminer avec précision le "centre de gravité" d'une activité, représentée par des grandeurs analogiques, distribuée sur une pluralité de noeuds d'un réseau.

Nombreux sont les cas où l'information initiale est présente sous la forme de grandeurs analogiques distribuées sur un réseau de noeuds définissant un espace. Tel est le cas, notamment, d'un réseau, par exemple unidimensionnel, de photodiodes qui sont soumises à une illumination quelconque. Pour certaines applications, il est nécessaire, voire suffisant, de déterminer et de transmettre, pour un traitement ultérieur, une information relative au centre d'activité des photodiodes - c'est-à-dire la position du point (centre d'activité) où pourrait être concentrée une activité globale - pour représenter significativement l'activité distribuée. On comprendra aisément qu'un gain important, en matière de quantité d'informations transmises, puisse être réalisé si l'on est capable de déterminer un tel centre d'activité.

Une autre exemple d'application important est celui des rétines artificielles. L'activité, dans une rétine artificielle, est l'intensité engendrée dans les points (ou pixels) de la rétine par la lumière atteignant cette même rétine. Déterminer le "centre de gravité" des points activés (ou centre d'activité) consiste, là encore, à déterminer le centre où pourrait être concentrée l'activité de l'activité d'entrée. On comprend également que la possibilité de pouvoir concentrer l'activité sur un ou deux points, plutôt que sur l'ensemble des points d'une image puisse être très avantageuse sur le plan de la quantité d'informations à traiter localement ou à transmettre aux étages de traitement ultérieur. Par ailleurs, dans le cas d'applications impliquant la mise en cascade de plusieurs réseaux successifs, comme c'est souvent le cas dans les systèmes de traitement de type neuronal, il peut se produire un phénomène d'étalement du spot d'un réseau à l'autre. Dans de telles applications, un circuit condenseur de distribution d'activité se révèle encore d'une grande utilité pour re-concentrer le spot entre les réseaux. Le terme de centre de gravité utilisé ici est emprunté à la mécanique car, comme on le verra plus loin, une analogie peut être faite entre les principes de fonctionnement du circuit de l'invention et le calcul des moments de forces par rapport à un centre de gravité.

L'objet de la présente invention est un circuit de concentration qui, à partir d'une distribution d'activité représentée sous forme de grandeurs analogiques présentes sur les noeuds d'un réseau d'entrée, fournit une information de sortie sur deux noeuds adjacents de sortie de telle sorte que lesdits noeuds adjacents de sortie encadrent le centre de gravité de ladite distribution d'activité et que, sur chacun desdits noeuds adjacents de sortie, soit présente une grandeur analogique de sortie;

le rapport desdites deux grandeurs analogiques de sortie indiquant la distance dudit centre de gravité à chacun desdits noeuds adjacents de sortie.

Les caractéristiques de la présente invention sont définies dans les revendications jointes.

D'autres objets, caractéristiques et avantages de la présente invention apparaîtront plus clairement à la lecture de la description suivante, ladite description étant faite à titre d'exemple et en relation avec les dessins joints dans lesquels:

- la figure 1 montre de manière schématique l'objet du circuit selon l'invention;

- la figure 2 montre une représentation analogique dans le domaine de la mécanique classique;

- la figure 3 représente schématiquement différentes déterminations faites par le circuit de l'invention;

- la figure 4.a montre le principe de calcul des moments tandis que la figure 4.b représente un mode de réalisation d'un tel circuit de calcul; et

- la figure 5 représente un mode de réalisation du circuit selon l'invention.

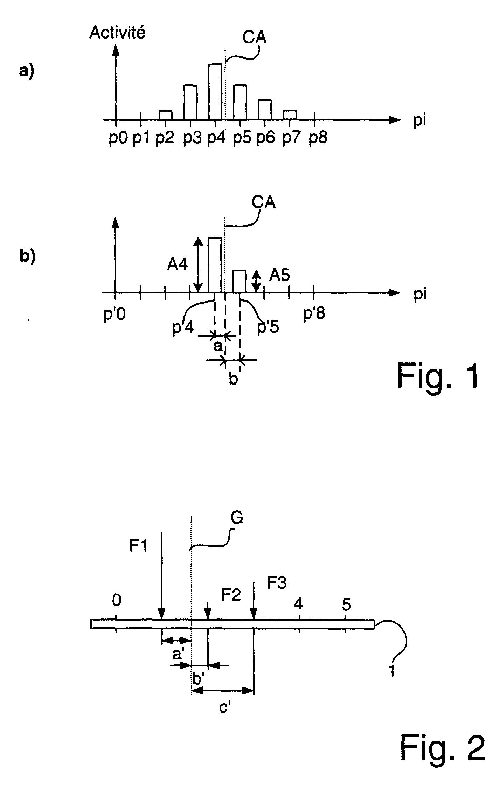

Le diagramme de la figure 1 représente en a) une distribution d'activité sur un nombre donné de positions préférentielles ou noeuds d'entrée (p0 à p8). Les activités sont représentées sous la forme de barres verticales dont les hauteurs sont représentatives des activités sur les noeuds respectifs. Comme indiqué précédemment, ces activités peuvent correspondre aux intensités engendrées par les diodes d'un réseau de photodiodes et les positions préférentielles correspondre aux positions des photodiodes dans ledit réseau. Le centre d'activité CA, c'est-à-dire le point du réseau où toute l'activité pourrait être concentrée, se trouve situé entre les positions p4 et p5 en un point plus proche de p4 que de p5. Pour transmettre la position de ce centre d'activité sur un réseau de sortie comportant le même nombre de positions (p'0 à p'8), il suffit (voir figure 1.b) de représenter une activité de sortie sur les deux seules positions de sortie p'4 et p'5, ces activités de sortie ayant alors une amplitude telle que leur rapport représente la distance du centre d'activité à l'une ou l'autre de ces dites positions de sortie. Ainsi sur la figure 1.b, ces amplitudes sont telles que l'on a:

$$A4.a = A5.b \qquad (1)$$

La relation précédente peut être mieux comprise si l'on se réfère à la figure 2 représentant une poutre (de masse supposée nulle) soumises à des forces F1 à F3 réparties sur un certain nombre de points (1, 2 et 3). Le centre de gravité d'application de ces forces est le point par rapport auquel la somme des moments de toutes les forces est nulle. Cela équivaut à remplir la condition:

$$a'.F1=b'.F2 + c'.F3 \qquad (2)$$

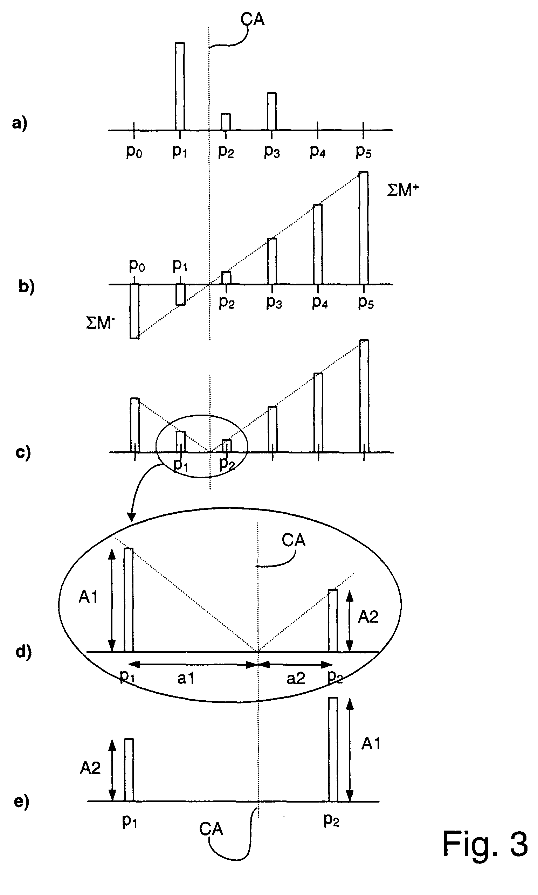

La présente invention se propose d'exploiter cette analogie comme cela est décrit en relation avec la figure 3. On retrouve, à la figure 3.a, une distribution d'activité d'entrée répartie sur un certain nombre fini de noeuds d'entrée (p0 à p5). Selon l'invention, il est proposé d'effectuer pour chaque noeud la somme des "moments", c'est-à-dire la somme des produits de l'activité des autres noeuds par la distance qui les séparent du noeud choisi. La figure 1.b montre, pour les noeuds d'entrée, les représentations de ces sommes de "moments". Dans la suite de la description, on gardera cette appellation de somme des moments. Le centre d'activité CA est défini comme le point où la courbe interpolée représentant la somme des moments passe par zéro. La figure 3.c montre une représentation similaire à celle de la figure 3.b mais où les sommes des moments sont en valeur absolue, ce qui correspond à l'implémentation pratique, telle qu'elle sera décrite ci-après. La figure 3.d montre un agrandissement de la figure 3.c autour du centre d'activité CA. La position de ce centre d'activité est telle que l'on a:

$$A1 / a1 = A2 / a2 \qquad (3)$$

Afin de revenir dans les conditions de la relation (1), il suffit d'échanger les valeurs présentes sur les noeuds p1 et p2, comme le montre la figure 1.e.

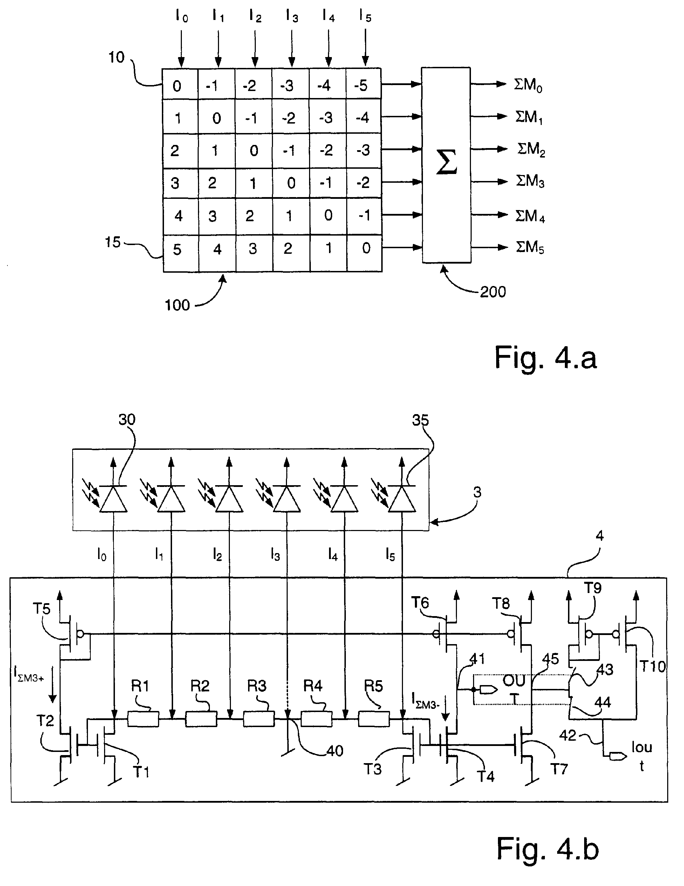

La figure 4.a montre le principe du calcul de la somme des moments par rapport à chacun des noeuds d'entrée. Chaque ligne du tableau 100 comprend les coefficients par lesquels les activités d'entrée (10 à 15) doivent être multipliées pour obtenir les moments de ces activités pour le noeud correspondant à cette ligne. Ainsi, pour le noeud 0 (ligne 10), les activités d'entrée 10 à 15 doivent être multipliées par les coefficients 0, -1, -2, ..., -5, respectivement. Pour le noeud 5 (ligne 15), ces mêmes activités sont multipliées par les coefficients +5, +4, +3, ..., 0, respectivement. Les signes des coefficients permettent de distinguer les moments des activités par leur signe, selon que ces activités sont appliquées sur un noeud situé à droite ou à gauche du centre d'activité. Par convention, les moments seront négatifs lorsque les activités sont appliquées sur les noeuds à gauche du centre d'activité et positifs dans l'autre cas. Pour chaque noeud d'entrée i, la somme des moments $\Sigma M_i$ est effectuée par le bloc sommateur 200. Comme chaque sortie du bloc 200 est associée à un noeud (ou une position) d'entrée, l'ensemble des valeurs de sortie de ce bloc représente la carte des sommes de moments, telle qu'elle est représentée à la figure 3.b. Déterminer la position du centre d'activité nécessite donc, pour chaque noeud, de calculer la valeur de la somme des moments ainsi que son signe.
Le schéma de la figure 4.b montre comment réaliser pour un noeud donné, par exemple le noeud 3, la détermination de la somme des moments et de son signe. Les activités d'entrée sont les courants 10 à 15 fournis par les photodiodes 30 à 35 d'un réseau 3, lorsque celui-ci est soumis à une irradiation lumineuse. Ces courants sont transmis à un circuit 4 de détermination de la somme des moments et de son signe. Ce circuit 4 comprend un réseau linéaire de cinq résistances R1 à R5 connectées en série entre deux miroirs de courant constitués par les transistors T1 et T2, d'une part, et T3 et T4, d'autre part. Ces résistances d'égale valeur constituent les coefficients par lesquels les activités d'entrée (soit 10 à 15) doivent être multipliées. Le coefficient nul, correspondant dans ce cas au noeud 3, est obtenu en connectant le point correspondant 40 à la masse. Le courant 13 qui lui correspond peut aussi bien ne pas être appliqué au réseau de résistances; ce qu'indique la connexion en pointillé. Les autres courants 10 à 12 et 14 à 15 sont appliqués sur ce réseau de résistances de telle sorte que les courants 10 et 15 ne voient aucune résistance et les courants I1, I2 et I4 soient divisés selon les rapports respectifs: 2/3, 1/3, et 1/2. Les courants $I_{T1}$ et $I_{T3}$ traversant les transistors T1 et T3 sont:

$$I_{T1} = 3/3.I0 + 2/3.I1 + 1/3.I2 \qquad (4)$$

$$I_{T3} = 1/2.I4 + 2/2.I5 \qquad (5)$$

Or, comme des activités de même valeur appliquées à des distances équidistantes du noeud considéré doivent avoir le même poids, il convient de pondérer les valeurs ci-dessus pour tenir compte du nombre différent de résistances de part et d'autre du noeud 3. La somme des moments des activités du réseau par rapport à ce noeud 3 est alors donnée par:

$$\Sigma M3 = 3.I_{T1}-2.I_{T3} \qquad (6)$$

La pondération mentionnée ci-dessus est réalisée par un choix approprié des rapports des miroirs de courant. Ainsi, dans ce cas, le miroir de courant T1/T2 est dessiné pour avoir un rapport 3 alors que le miroir de courant T3/T4 est dessiné pour avoir un rapport 2. Les courants $I_{\Sigma M3-}$ et $I_{\Sigma M3+}$ qui traversent les transistors T4 et T2, respectivement, représentent bien les composantes négative et positive de la somme des moments des activités du réseau d'entrée pour ledit noeud d'entrée 3. Le montage en miroir de courant des deux transistors T5 et T8 permet de mirer le courant $I_{\Sigma M3+}$ dans le chemin de conduction des transistors T7 et T8, où, selon le principe de superposition des courants, est réalisée la relation (6) ci-dessus. Le courant représentant la valeur de $\Sigma M3$ ne peut pas être prélevé sur le noeud 45 commun aux deux transistors T7 et T8 car son sens dépend du signe de $\Sigma M3$. Ce courant est donc "redressé" par les transistors T9 et T10 et les interrupteurs 44 et 43. Ces interrupteurs, en série avec le transistor T9 sont commandés par la tension du noeud 41 commun aux transistors T4 et T6. Les transistors T4 et T6 sont identiques aux transistors T7 et T8 et leurs électrodes de grille sont connectées aux mêmes points que celles des transistors T7 et T8. Le courant pouvant être extrait du noeud 45 est égal à $\Sigma M3$. Selon la position des interrupteurs 43 et 44, ce courant $I_{out}$ est soit directement appliqué sur la sortie 42 (interrupteur 44 fermé et interrupteur 43 ouvert), soit appliqué sur cette même sortie après inversion par le miroir de courant formé par les transistors T9 et T10 (interrupteur 43 fermé et interrupteur 44 ouvert). La tension sur le noeud 41, qui commande ces interrupteurs, dépend du signe de $\Sigma M3$. En effet, lorsque $I_{\Sigma M3-}$ est plus grand que $I_{\Sigma M3+}$, la tension sur le noeud 41 est haute alors que, dans l'autre cas, elle est basse. Cette tension peut donc être utilisée pour commander les interrupteurs 43 et 44 de manière appropriée. Elle constitue, également, l'information du signe de $\Sigma M3$ qui sera utilisée comme indiqué ci-après. Sur les sorties 42 et 41 du circuit 4 apparaissent donc une information analogique $I_{out}$ qui représente la valeur absolue de $\Sigma M3$ et une information digitale OUT qui représente le signe de $\Sigma M3$. Les interrupteurs 43 et 44 seront avantageusement réalisés par des transistors MOS.

Selon un autre mode avantageux de réalisation, en particulier sous forme d'un circuit intégré, les résistances R1 à R5 peuvent être réalisées par des pseudo-conductances telles que décrites dans l'article de E. Vittoz et X. Arreguit, intitulé "Linear networks based on transistors" et paru dans la revue Electronic Letters, vol. 29, No 3, Février 1993, pp. 297-298. L'utilisation de telles pseudo-conductances permet d'améliorer la précision et de réduire la taille du réseau de résistances. Par ailleurs, pour des applications dans lesquelles les noeuds d'entrée ne sont pas régulièrement espacés, ces résistances peuvent être choisies de valeur inégale. De plus, bien que l'on ait limité la description précédente à un réseau d'entrée unidimensionnel, on comprendra aisément que les principes de l'invention restent applicables à un réseau multidimensionnel.

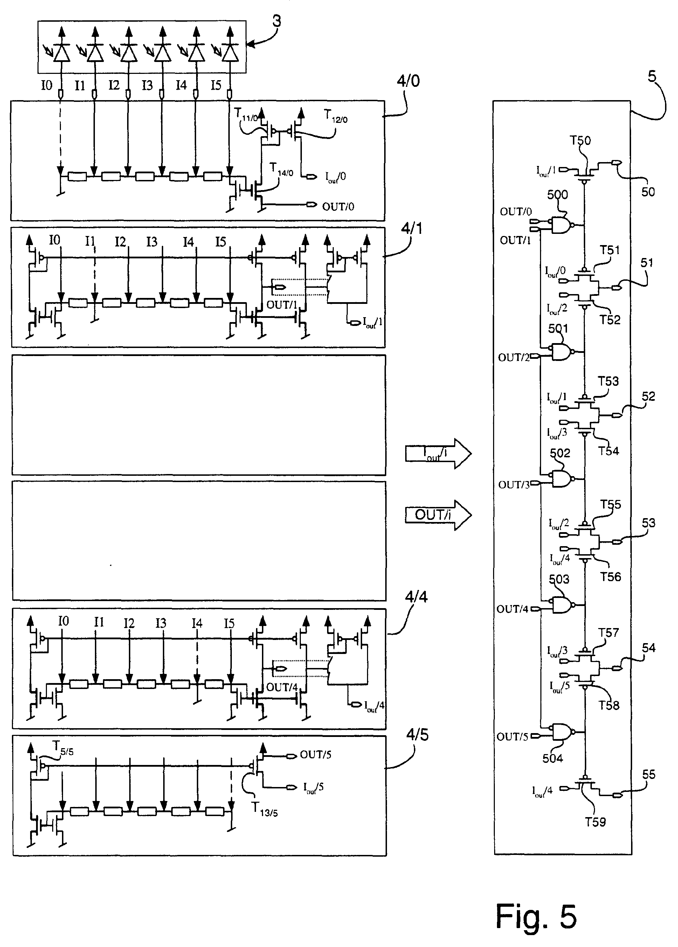

L'ensemble du circuit de l'invention est représenté à la figure 5. On retrouve le réseau de photodiodes d'entrée 3 dont les courants de sortie 10 à 15 alimentent les circuits de calcul des moments 4/0 à 4/5. Les circuits 4/1 à 4/4 sont identiques à celui décrit en relation avec la figure 4.b, tandis que les circuits 4/0 et 4/5 en sont des versions simplifiées. Pour le circuit 4/0, la somme des moments n'a qu'une composante négative car le noeud d'entrée 0 occupe une position extrême à gauche du réseau. Donc, seuls les transistors $T_{11/0}$ et

$T_{12/0}$ sont requis pour extraire les deux informations $I_{out}/0$ et OUT/0 représentant les valeurs analogique et digitale de la somme des moments et de son signe, respectivement. Pour le circuit 4/5, la somme des moments n'a qu'une composante positive car le noeud d'entrée 5 occupe une position extrême à droite du réseau. Les transistors $T_{5/5}$ et $T_{13/5}$ permettent d'extraire les deux informations $I_{out}/5$ et OUT/5. Les informations de sortie des circuits 4/i, à savoir les signaux $I_{out}/i$ et OUT/i, sont appliquées au circuit 5, lequel effectue l'opération représentée schématiquement aux figures 3.d et 3.e. Cette opération consiste en la sélection des deux valeurs absolues des sommes de moments correspondant aux deux noeuds entourant la position du centre d'activité, lesdites sommes de moments étant de signes opposés, et en leur transposition réciproque. Le circuit 5 comprend cinq portes NAND 500 à 504, dont une entrée est inversée et l'autre directe, et 10 transistors à canal p T50 à T59. Si l'on se réfère à l'exemple montré à la figure 3, la distribution d'entrée est telle que le centre d'activité se trouve entre les positions p1 et p2. C'est donc entre ces deux positions que s'opère un changement de signe de la somme des moments et c'est entre ces deux positions que doit être effectuée l'échange réciproque des valeurs de ces mêmes moments. Si, maintenant, l'on revient au circuit 5 de la figure 3, le changement de signe entre p1 et p2 commande le passage à zéro de la sortie de la porte NAND 501, qui reçoit les signes des sommes de moments des deux noeuds 1 et 2, alors que les sorties de toutes les autres portes NAND restent à un. Le passage à zéro de cette porte 501 entraîne la conduction des transistors T52 et T53 qui envoient les courants $I_{out}/2$ et $I_{out}/1$ sur les sorties 51 et 52, respectivement. Les valeurs présentes sur les noeuds de sortie 51 et 52 sont alors conformes à la représentation illustrée à la figure 3.e.

Ainsi, d'une distribution d'activité présente sur une pluralité de noeuds d'entrée, le circuit de l'invention permet d'extraire l'information sur la position du centre d'activité où l'ensemble des activités pourrait être concentré.

## Revendications

1. Circuit condenseur de distribution d'activité destiné à fournir, à partir d'une activité d'entrée représentée par un ensemble de grandeurs analogiques distribuées sur une pluralité de noeuds d'un réseau d'entrée, la position du centre de gravité de ladite distribution d'entrée sur un réseau de sortie en générant, sur deux noeuds de sortie entourant ledit centre de gravité, deux grandeurs analogiques dont le rapport détermine ladite position par rapport auxdits noeuds de sortie, ledit circuit étant **caractérisé en ce qu'**il comprend:

   - un réseau d'entrée (3) comportant une pluralité de noeuds d'entrée capable de fournir une grandeur analogique représentant une activité d'entrée;

- un circuit (4) de calcul de la somme des moments capable d'effectuer, à partir des grandeurs analogiques fournies par ledit réseau d'entrée, pour chacun des noeuds dudit réseau d'entrée le calcul de la valeur absolue de la somme des moments desdites activités d'entrée des autres noeuds dudit réseau d'entrée et la détermination du signe de ladite somme des moments; et

- un circuit de sélection (5) capable de sélectionner les deux valeurs absolues, fournies par le circuit de calcul, des sommes de moments qui correspondent à deux noeuds adjacents et présentent des signes opposés et d'appliquer lesdites deux valeurs sélectionnées à deux noeuds adjacents dudit réseau de sortie de manière telle que leur rapport détermine la position dudit centre de gravité par rapport auxdits deux noeuds adjacents.

2. Circuit condenseur de distribution d'activité selon la revendication 1, **caractérisé en ce que** lesdites grandeurs analogiques représentant les activités d'entrée sont des courants (I0 - I5).

3. Circuit condenseur de distribution d'activité selon la revendication 1 ou la revendication 2, **caractérisé en ce que** ledit réseau d'entrée (3) est un réseau de photodiodes (30 - 35) et **en ce que** lesdites grandeurs analogiques sont les courants (I0 - I5) engendrés par lesdites photodiodes lorsque ces dernières sont soumises à une irradiation lumineuse.

4. Circuit condenseur de distribution d'activité selon la revendication 2 ou la revendication 3, **caractérisé en ce que** ledit circuit (4) de calcul de la somme des moments comprend pour chaque noeud dudit réseau d'entrée:

- un réseau de résistances (R1 - R5) auquel sont appliqués lesdits courants (I0 - I5) fournis par le réseau d'entrée, ledit réseau de résistances étant arrangé de manière à permettre la multiplication de chacun desdits courants par un coefficient correspondant à la position du noeud d'entrée qu'il occupe dans le réseau par rapport au noeud vis-à-vis duquel ladite somme de moments est calculée;

- un circuit (T1/T2) de calcul de la somme des moments de signe positif;

- un circuit (T3/T4) de calcul de la somme des moments de signe négatif;

- un circuit (T7/T8, T9/T10, 43 et 44) de détermination de la valeur absolue de la somme des moments; et

- un circuit (T4/T6) de détermination du signe de la somme des moments.

5. Circuit condenseur de distribution d'activité selon la revendication 4, **caractérisé en ce que** ledit réseau de résistances est constitué de transconductances.

6. Circuit condenseur de distribution d'activité selon la revendication 4, **caractérisé en ce que** lesdits circuits de calcul des moments de signes négatif et positif sont constitués par des miroirs de courant dont les rapports sont choisis de manière à compenser les nombres différents de résistances dudit réseau de résistances pour les calculs desdites sommes de moments de signes positif et négatif.

7. Circuit condenseur de distribution d'activité selon la revendication 4, **caractérisé en ce que** ledit circuit de sélection (5) comporte des moyens (500 à 505 et T50 à T59) pour appliquer, sur les deux noeuds de sortie qui entourent le centre de gravité, les valeurs échangées des sommes de moments calculées par rapport aux deux noeuds d'entrée qui leur correspondent.

Fig. 1

Fig. 2

Fig. 3

Fig. 4.a

Fig. 4.b

Fig. 5

Office européen
des brevets

**RAPPORT DE RECHERCHE EUROPEENNE**

Numéro de la demande

EP 00 81 0333

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | YU N M ET AL: "A REAL-TIME CENTER-OF-MASS TRACKER CIRCUIT IMPLEMENTED BY NEURON MOS TECHNOLOGY" IEEE TRANSACTIONS ON CIRCUITS AND SYSTEMS II: ANALOG AND DIGITAL SIGNAL PROCESSING,US,IEEE INC. NEW YORK, vol. 45, no. 4, 1 avril 1998 (1998-04-01), pages 495-503, XP000782502 ISSN: 1057-7130 | 1-3 | G06N3/063 |
| A | * page 496, colonne de gauche, ligne 10 – page 497, colonne de gauche, ligne 35; figures 1-3 * | 5 | |
| | | | **DOMAINES TECHNIQUES RECHERCHES (Int.Cl.7)** |
| | | | G06N |

Le présent rapport a été établi pour toutes les revendications

| Lieu de la recherche | Date d'achèvement de la recherche | Examinateur |
|---|---|---|
| LA HAYE | 3 août 2000 | Ledrut, P |